# EUROPEAN PATENT APPLICATION

(11) **EP 1 688 821 A1**
(43) Date of publication of application: **09.08.2006**
(21) Application number: 06001234.1
(22) Date of filing: 20.01.2006
(51) Int. Cl.: G06F 1/16

(54) **Liquid crystal display screen with camera**

(30) Priority: 02.02.2005 CN 200510033165
(71) Applicant: Huawei Technologies Co., Ltd., 518129 Shenzhen (CN)
(72) Inventor: Yue, Shihe, Longgang District shenzhen, 518129 (CN)
(74) Representative: Goddar, Heinz J.

(57) **Abstract**

The present invention discloses a liquid crystal display screen (3) with camera (1), comprising a front enclosure (7) and a rear enclosure (6) of the display screen (3), the camera (1) being disposed on the top of the front and rear enclosures (7, 6), with rotary shafts (5) provided at both sides of the camera (1), wherein said front enclosure (7) and rear enclosure (6) are provided with notches (8, 9) on the top, when said front enclosure (7) and rear enclosure (6) are engaged with each other, the notches (8, 9) on the top of the front enclosure (7) and rear enclosure (6) forming a recess to accommodate said camera (1); at both sides of the recess, there are provided shaft holes (10) corresponding to the rotary shafts (5) at both sides of said camera (1), with a stop (12) at inner side of one of the shaft holes (10), and a limiting block (11) corresponding to said stop (12) at the end of the rotary shaft (5) in said shaft hole (10), and said camera (1) can be rotated back and forth around said shaft hole (10) and blocked by said stop (12). The camera (1) can be rotated back and forth within 190°, with the limiting block (11) and the stop (12) arranged to prevent excessive rotation. By use of the above connecting structure, the camera (1) for visual telephone can be rotated backward by 180°, ensuring that either party participating in the talk can choose whether to be seen by the other party or not at discretion, with ease of use.

## Description

### Field of the invention

The present invention relates to a liquid crystal display screen, particularly to a liquid crystal display screen with camera for visual telephone, and more specifically to an improvement in the structure for connecting the camera with the liquid crystal display screen.

### Background of the invention

In the prior art, there is a kind of visual telephone, which implements visual talk through disposing a camera above the display screen, wherein the camera and the display screen are connected in one of the following ways.

One is to embed the camera module in the liquid crystal display screen; in this case, the camera can not be rotated separately, instead, it has to be rotated along with the liquid crystal display screen when requiring rotation. The drawback of this way of connecting is that it can not provide the opposite party an image at a more suitable position.

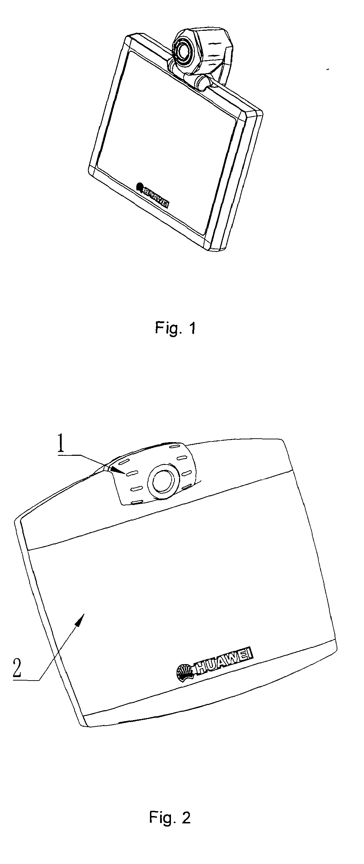

Another is as shown in Fig.1, a camera 1 being disposed above a liquid crystal display screen 3 and connected with a rotary shaft 2 mounted on the top of the enclosure of the liquid crystal display screen 1; in this way of connecting, the rotational angle is limited, such as within only 15° back and forth, and the camera can not be rotated backward by 180°; as a result, either party can always see the other party in talking if there is no software masking.

### Summary of the invention

An object of the present invention is to provide a liquid crystal display screen with camera; wherein the camera module on such liquid crystal display screen can be rotated backward by 180-190°, ensuring that either party can choose whether to be seen by the other party or not in talking.

According to the technical solution of the present invention, there is provided a liquid crystal display screen with camera, comprising a front enclosure and a rear enclosure, the camera being disposed on the top of the front and rear enclosures, with rotary shafts provided at both sides of the camera, wherein said front enclosure and rear enclosure have a notch on the top respectively, when said front enclosure and rear enclosure are engaged with each other, the notches on the top of the front enclosure and rear enclosure forming a recess to accommodate said camera; at both sides of the recess, there are provided shaft holes corresponding to the rotary shafts at both sides of said camera, with a stop at inner side of one of the shaft holes, and a limiting block corresponding to said stop at the end of the rotary shaft in said shaft hole, and said camera can be rotated back and forth around said shaft hole and blocked by said stop.

The present invention has the following advantages: as the camera on the top of the liquid crystal display screen is in rotary connection to the enclosures via the rotary shaft, it can be rotated back and forth around the shaft holes, with the limiting block and the stop arranged to prevent excessive rotation; by use of the above connecting structure, the camera for visual telephone can be rotated backward by 180°, ensuring that either party participating in the talk can choose whether to be seen by the other party or not at discretion.

### Brief description of the drawings

Fig.1 is a structural schematic of a liquid crystal display screen with camera in the prior art;

Fig.2 is a structural schematic of a liquid crystal display screen with camera according to the present invention;

Fig.3 is an exploded structural schematic of the liquid crystal display screen with camera shown in Fig.2;

Fig. 4 is a partially enlarged schematic of the connecting structure for the camera and liquid crystal display screen enclosures in the liquid crystal display screen with camera shown in Fig.3.

### Detailed description of the embodiments

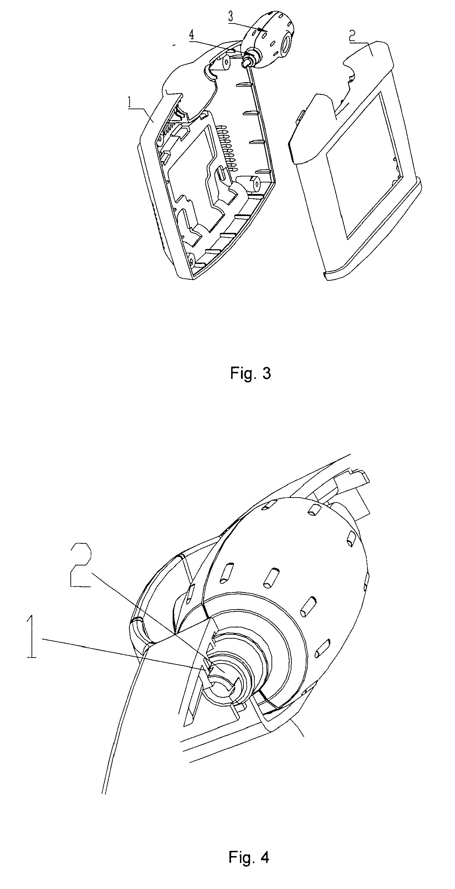

Referring to Figs. 2, 3 and 4, there is provided a liquid crystal display screen with camera, comprising front enclosure 7 and rear enclosure 6 making up of the liquid crystal display screen 3, the camera 1 being disposed on the top of the front and rear enclosures, with rotary shafts 5 provided at both sides of the camera 1, wherein said front enclosure 7 and rear enclosure 6 have notches 8 and 9 on the top, when said front enclosure 7 and rear enclosure 6 are engaged with each other, the notches 8 and 9 on the top of front enclosure 7 and rear enclosure 6 forming a recess to accommodate said camera 1; at both sides of the recess, there are provided shaft holes 10 corresponding to the rotary shafts 5 at both sides of said camera, with a stop 12 at inner side of one of the shaft holes 10, and a limiting block 11 corresponding to said stop 12 at the end of the rotary shaft in said shaft hole, and said camera can be rotated back and forth around said shaft hole, with the limiting block 11 thereof blocked by said stop 12 to limiting the extent of rotation during the rotation. With the limiting block 11 being sized, the camera 1 can be rotated back and forth within 190°, with 10° forward and 180° backward.

To ensure the camera 1 being rotated smoothly, a rubber ring 4 can be fitted over the rotary shaft 5 to increase frictional force.

In the liquid crystal display screen with camera as described above, the profile of the camera 1 is drum-shaped, with multiple small flanges 13 on the surface to facilitate pushing the camera 1 to rotate.

In the liquid crystal display screen with camera as described above, one of the rotary shafts 10 of the camera 1 is a hollow shaft 14 designed for cabling.

With the liquid crystal display screen provided in the present invention, the camera for visual telephone can be rotated backward by 180°, ensuring that either party participating in the talk can choose whether to be seen by the other party or not at discretion.

The present invention has the following advantages: as the camera on the top of the liquid crystal display screen is in rotary connection to the enclosures via the rotary shaft, it can be rotated back and forth around the shaft hole, with the limiting block and the stop arranged to prevent excessive rotation; by use of the above connecting structure, the camera for visual telephone can be rotated backward by 180°, ensuring that either party participating in the talk can choose whether to be seen by the other party or not at discretion.

## Claims

1. A liquid crystal display screen (3) with camera (1), comprising a front enclosure (7) and a rear enclosure (6) of the display screen (3), the camera (1) being disposed on the top of the front and rear enclosures (7, 6), with rotary shafts (5) provided at both sides of the camera (1), **characterized in that** said front enclosure (7) and rear enclosure (6) are provided with notches (8, 9) on the top, when said front enclosure (7) and rear enclosure (6) are engaged with each other, the notches (8, 9) on the top of the front enclosure (7) and rear enclosure (6) forming a recess to accommodate said camera (1); at both sides of the recess, there are provided shaft holes (10) corresponding to the rotary shafts (5) at both sides of said camera (1), with a stop (12) at inner side of one of the shaft holes (10), and a limiting block (11) corresponding to said stop (12) at the end of the rotary shaft (5) in said shaft hole (10), and said camera (1) can be rotated back and forth around said shaft hole (10) and blocked by said stop (12).

2. The liquid crystal display screen (3) with camera (1) according to claim 1, **characterized in that** rubber rings (4) are fitted over the shaft holes (10) at both sides of said camera (1).

3. The liquid crystal display screen (3) with camera (1) according to claim 1 or 2, **characterized in that** the profile of said camera (1) is drum-shaped, with multiple small flanges (13) on the surface.

4. The liquid crystal display screen (3) with camera (1) according to claim 1 or 2, **characterized in that** one of the rotary shafts (5) of said camera (1) is a hollow shaft (14).
